(19) Europäisches Patentamt / European Patent Office / Office européen des brevets

(11) **EP 4 102 872 B1**

(12) **FASCICULE DE BREVET EUROPEEN**

(45) Date de publication et mention
de la délivrance du brevet:
**08.11.2023 Bulletin 2023/45**

(21) Numéro de dépôt: **22178071.1**

(22) Date de dépôt: **09.06.2022**

(51) Classification Internationale des Brevets (IPC):
***H04W 16/20*** *(2009.01)* ***G01S 13/76*** *(2006.01)*
***G01C 21/16*** *(2006.01)*

(52) Classification Coopérative des Brevets (CPC):
**G01S 13/765; G01C 21/1652**

(54) **DETECTION ET CARACTERISATION D'OBSTACLE**

ERKENNUNG UND CHARAKTERISIERUNG EINES HINDERNISSES

OBSTACLE DETECTION AND CHARACTERISATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.06.2021 FR 2106206**

(43) Date de publication de la demande:
**14.12.2022 Bulletin 2022/50**

(73) Titulaire: **SAGEMCOM BROADBAND SAS
92500 Rueil-Malmaison (FR)**

(72) Inventeurs:
• **SABATIER, Pierre
92500 RUEIL MALMAISON (FR)**
• **BERTHELE, Patrick
92500 RUEIL MALMAISON (FR)**

(74) Mandataire: **Lavaud, Thomas
Cabinet Boettcher
5, rue de Vienne
75008 Paris (FR)**

(56) Documents cités:
**US-A1- 2008 157 957    US-A1- 2021 037 498**

• TIAN QINGLIN ET AL: "An INS and UWB Fusion
Approach With Adaptive Ranging Error
Mitigation for Pedestrian Tracking", IEEE
SENSORS JOURNAL, IEEE, USA, vol. 20, no. 8, 6
janvier 2020 (2020-01-06), pages 4372-4381,
XP011779235, ISSN: 1530-437X, DOI:
10.1109/JSEN.2020.2964287 [extrait le
2020-03-17]
• SILVA BRUNO J ET AL: "An Approach to Improve
Location Accuracy in Non-Line-of-Sight
Scenarios using Floor Plans", 2019 IEEE 17TH
INTERNATIONAL CONFERENCE ON
INDUSTRIAL INFORMATICS (INDIN), IEEE, vol. 1,
22 juillet 2019 (2019-07-22), pages 1715-1718,
XP033700721, DOI:
10.1109/INDIN41052.2019.8972048

**Description**

L'invention concerne le domaine de la cartographie de propagation de signaux radio (signaux Wi-Fi par exemple).

ARRIERE PLAN DE L'INVENTION

Un système Wi-Fi distribué permet de mettre en oeuvre un réseau local maillé qui présente une couverture étendue.

Un tel système Wi-Fi distribué comporte une pluralité de noeuds qui communiquent entre eux via une liaison dite « *backhaul* » qui utilise par exemple un lien radio Wi-Fi ou un lien filaire Ethernet.

La liaison *backhaul* permet aux noeuds d'échanger des commandes, notamment de gestion, au travers d'un bus de communication. La liaison *backhaul* sert également de support aux différents flux de données entre les noeuds et le réseau.

Chacun des noeuds intègre au moins un point d'accès Wi-Fi dit « *fronthaul* » permettant à un équipement externe de communiquer avec le réseau.

L'un des noeuds du système Wi-Fi distribué est porteur d'une fonctionnalité de « maître ». Le noeud maître a pour missions de gérer le système Wi-Fi distribué, notamment son architecture, et de forcer chaque équipement externe connecté au réseau local à communiquer avec l'un des points d'accès *fronthaul* de l'un des noeuds en fonction de caractéristiques locales de propagation des signaux Wi-Fi.

Les positions des noeuds et les caractéristiques de l'émission des signaux Wi-Fi ne sont pas toujours définies de manière optimale par rapport à l'espace que doit couvrir le réseau. En particulier, si les points d'accès sont positionnés arbitrairement dans une habitation par un utilisateur novice en la matière, la couverture du réseau n'est pas optimisée.

On envisage donc de quantifier la propagation des signaux radio produits par les points d'accès, de manière à produire une cartographie de la qualité de connexion dans l'habitation. La carte réalisée peut être utilisée pour configurer les points d'accès du réseau de sorte que l'espace à cartographier soit couvert le plus efficacement possible.

Cependant, une habitation comporte de nombreux obstacles qui ont une influence importante sur la propagation des signaux radio. Les murs pleins (béton, brique), en particulier, constituent des obstacles majeurs. Or, il n'existe pas actuellement de méthode simple, efficace et peu coûteuse pour détecter et caractériser les obstacles dans une habitation (ou dans tout autre bâtiment), ce qui représente un frein important dans la mise en oeuvre de la cartographie de couverture Wi-Fi. US 2008/157957 A1 et US 2021/037498 A1 divulguent un procédé de détection et de caractérisation d'obstacle à partir d'un comparaison des données d'amplitude mesurée (RSSI) avec des données de temps de vol (ToF).

OBJET DE L'INVENTION

L'invention a pour objet d'améliorer la cartographie de propagation de signaux radio (Wi-Fi par exemple).

RESUME DE L'INVENTION

En vue de la réalisation de ce but, on propose un procédé de détection et de caractérisation d'obstacle, comprenant les étapes de :

- acquérir au moins un couple de mesures, chaque couple de mesures étant associé à une position courante d'un terminal mobile et comprenant une première mesure de distance et une deuxième mesure de distance entre ledit terminal mobile et un équipement de référence, chaque première mesure de distance étant obtenue à partir d'au moins une mesure inertielle produite par au moins un capteur inertiel du terminal mobile, chaque deuxième mesure de distance étant obtenue à partir d'au moins une mesure de temps de vol ;
- pour chaque couple de mesures :

  o évaluer une erreur de distance représentative d'une différence entre la deuxième mesure de distance et la première mesure de distance dudit couple de mesures ;
  o à partir de l'erreur de distance, détecter la présence d'un obstacle entre le terminal mobile et l'équipement de référence, et déterminer une ou des caractéristiques dudit obstacle.

Le procédé de détection et de caractérisation d'obstacle selon l'invention exploite donc la différence entre les deuxièmes mesures de distance, obtenues à partir de mesures de temps de vol, et les premières mesures de distance, obtenues à partir de mesures inertielles, pour détecter des obstacles (par exemple des murs) et évaluer des caractéristiques (physiques et structurelles) desdits obstacles.

La détection des obstacles permet d'améliorer très significativement la qualité de la cartographie de propagation de signaux radio.

Le procédé de détection et de caractérisation d'obstacle est très efficace, mais aussi très simple à réaliser et très peu coûteux à mettre en oeuvre, puisqu'il requiert uniquement un équipement de référence (par exemple une passerelle résidentielle) et un terminal mobile (par exemple un smartphone).

L'invention est particulièrement astucieuse : elle utilise le fait que, lorsqu'un signal radio traverse un milieu étranger, il est ralenti par le phénomène de réfraction, de sorte que le temps de vol est allongé, ce qui provoque un allongement « parasite » de la distance mesurée. Le procédé de détection et de caractérisation d'obstacle exploite cet allongement parasite pour détecter et caractériser l'obstacle.

On propose de plus un procédé de détection et de caractérisation d'obstacle tel que précédemment décrit, dans lequel les mesures de temps de vol utilisent des signaux UWB, l'équipement de référence intégrant une ancre UWB.

On propose de plus un procédé de détection et de caractérisation d'obstacle tel que précédemment décrit, comprenant en outre l'étape de comparer l'erreur de distance avec un seuil prédéterminé, et de détecter la présence de l'obstacle si l'erreur de distance est supérieure au seuil prédéterminé.

On propose de plus un procédé de détection et de caractérisation d'obstacle tel que précédemment décrit, dans lequel l'obstacle est un mur et dans lequel les caractéristiques de l'obstacle comprennent une indication selon laquelle le mur est un mur creux ou un mur plein et/ou un indice de réfraction du mur et/ou un matériau avec lequel a été construit le mur et/ou une épaisseur du mur.

On propose de plus un procédé de détection et de caractérisation d'obstacle tel que précédemment décrit, comprenant en outre les étapes de :

- acquérir une valeur d'épaisseur préalablement définie et susceptible de correspondre à l'épaisseur du mur ;
- calculer un indice de réfraction approché du mur à partir de la valeur d'épaisseur préalablement définie et de l'erreur de distance ;
- déterminer, dans une table contenant une pluralité d'indices de réfraction prédéfinis associés chacun à un matériau prédéfini, un indice de réfraction consolidé qui est le plus proche de l'indice de réfraction approché, et en déduire le matériau avec lequel a été construit le mur.

On propose de plus un procédé de détection et de caractérisation d'obstacle tel que précédemment décrit, dans lequel la détermination de l'indice de réfraction consolidé consiste à déterminer, parmi les indices de réfraction prédéfinis, un indice de réfraction prédéfini particulier qui minimise une fonction représentative d'une distance entre l'indice de réfraction approché et les indices de réfraction prédéfinis de la table.

On propose de plus un procédé de détection et de caractérisation d'obstacle tel que précédemment décrit, dans lequel la distance est une distance euclidienne.

On propose de plus un procédé de détection et de caractérisation d'obstacle tel que précédemment décrit, comprenant en outre l'étape d'évaluer une épaisseur réelle du mur à partir de l'erreur de distance et de l'indice de réfraction consolidé.

On propose de plus un procédé de détection et de caractérisation d'obstacle tel que précédemment décrit, comprenant en outre l'étape, si aucun obstacle n'est détecté entre le terminal mobile et l'équipement de référence, de recaler la première mesure de distance sur la deuxième mesure de distance.

On propose de plus un procédé de détection et de caractérisation d'obstacle tel que précédemment décrit, dans lequel la détermination de la deuxième mesure de distance comprend les étapes :

- d'acquérir un signal UWB ;
- de détecter un premier pic du signal UWB en utilisant un fenêtrage temporel centré sur un temps de référence obtenu à partir de la première mesure de distance ;
- de produire la deuxième mesure de distance à partir d'un temps de survenue du premier pic.

On propose de plus un procédé de détection et de caractérisation d'obstacle tel que précédemment décrit, comprenant en outre une étape d'initialisation consistant à définir un point d'origine des premières mesures de distance et des deuxièmes mesures de distance, le point d'origine étant défini lorsque la position courante du terminal mobile est une position de référence dans laquelle se trouve l'équipement de référence.

On propose de plus un procédé de détection et de caractérisation d'obstacle tel que précédemment décrit, comprenant l'étape de faire positionner par un utilisateur le terminal mobile dans la position de référence pour définir le point d'origine.

On propose de plus un procédé de détection et de caractérisation d'obstacle tel que précédemment décrit, comprenant l'étape de détecter automatiquement que le terminal mobile se trouve dans la position de référence pour définir le point d'origine.

On propose de plus un procédé de détection et de caractérisation d'obstacle tel que précédemment décrit, dans lequel le terminal mobile est un smartphone.

On propose de plus un procédé de détection et de caractérisation d'obstacle tel que précédemment décrit, dans lequel l'équipement de référence est une passerelle résidentielle.

On propose de plus un terminal mobile comprenant une unité de localisation agencée pour produire les premières mesures de distance, une unité de mesure de temps de vol agencée pour produire les deuxièmes mesures de distance, et une unité de traitement dans laquelle est mis en oeuvre le procédé de détection et de caractérisation d'obstacle tel que précédemment décrit.

On propose de plus un programme d'ordinateur comprenant des instructions qui conduisent l'unité de traitement du terminal mobile tel que précédemment décrit à exécuter les étapes du procédé de détection et de caractérisation d'obstacle tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés parmi lesquels :

[Fig. 1] la figure 1 représente une passerelle résidentielle et un smartphone ;

[Fig. 2] la figure 2 représente la passerelle résidentielle, le smartphone et un mur positionné entre la passerelle résidentielle et le smartphone ;

[Fig. 3] la figure 3 représente le cheminement autour du mur d'un utilisateur muni du smartphone ;

[Fig. 4] la figure 4 est un graphique qui représente, pour différentes positions courantes du smartphone, une première mesure de distance obtenue à partir de mesures inertielles et une deuxième mesure de distance obtenue à partir de mesures de temps de vol ;

[Fig. 5] la figure 5 est un graphique qui représente, pour chaque position courante, l'erreur de mesure entre la deuxième mesure de distance et la première mesure de distance ;

[Fig. 6] la figure 6 représente un signal radio pénétrant dans un mur avec un certain angle d'incidence ;

[Fig. 7] la figure 7 est une figure similaire à la figure 6, mais plus précise ;

[Fig. 8] la figure 8 est un graphique comprenant des courbes représentatives de la marche du signal radio dans le mur en fonction de l'angle d'incidence ;

[Fig. 9] la figure 9 représente un signal UWB reçu par le smartphone, alors qu'aucun obstacle ne se trouve entre le smartphone et la passerelle résidentielle ;

[Fig. 10] la figure 10 représente un signal UWB reçu par le smartphone, alors qu'un mur se trouve entre le smartphone et la passerelle résidentielle ;

[Fig. 11] la figure 11 est un graphique comprenant une courbe de premières mesures de distance et une courbe de deuxièmes mesures de distance, en fonction de la position courante du smartphone ;

[Fig. 12] la figure 12 est une table comprenant des caractéristiques de matériaux pouvant être utilisés pour construire un mur ;

[Fig. 13] la figure 13 représente deux équipements séparés par un mur, et le trajet direct d'un signal UWB ;

[Fig. 14] la figure 14 représente le signal UWB de la figure 13 traversant le mur ;

[Fig. 15] la figure 15 représente un diagramme comprenant des étapes du procédé de détection et de caractérisation d'obstacle selon l'invention ;

[Fig. 16] la figure 16 représente une table comprenant des indices de réfraction prédéfinis ;

[Fig. 17] la figure 17 représente un diagramme comprenant des étapes d'un procédé permettant de déterminer un indice de réfraction consolidé.

DESCRIPTION DETAILLEE DE L'INVENTION

L'invention est ici mise en œuvre dans un système comprenant un équipement de référence et un terminal mobile.

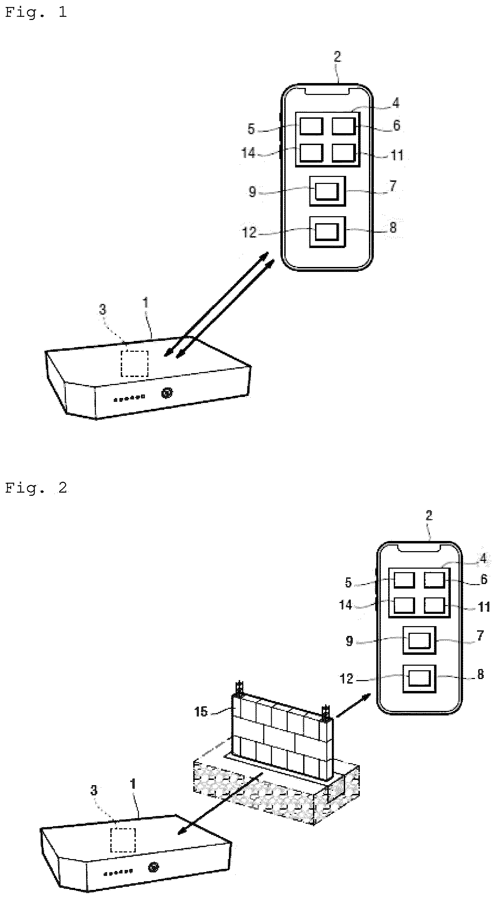

En référence aux figures 1 et 2, l'équipement de référence est fixe et est ici une passerelle résidentielle 1. Le terminal mobile est ici un smartphone 2.

La passerelle résidentielle 1 comporte une ancre UWB 3 comprenant un module d'émission et de réception de signaux UWB (UWB pour *Ultra Wide Band,* ou Ultra Large Bande en français).

Le smartphone 2 comporte une unité de traitement 4. L'unité de traitement 4 comprend ici une pluralité de composants de traitement, parmi lesquels au moins un premier composant de traitement 5 adapté à exécuter des instructions d'un programme pour mettre en oeuvre le procédé de détection et de caractérisation d'obstacle selon des modes de réalisation. Le programme est ici une application locale.

Le programme est stocké dans une mémoire 6 intégrée dans ou reliée au premier composant de traitement 5. Le premier composant de traitement 5 est par exemple un processeur classique, un microcontrôleur, un DSP (pour *Digital Signal Processor*, que l'on peut traduire par «processeur de signal numérique »), ou bien un circuit logique programmable tel qu'un FPGA (pour *Field Programmable Gate Arrays*) ou un ASIC (pour *Application Spécifie Integrated Circuit*).

Le smartphone 2 comporte aussi une unité de localisation 7 et une unité de mesure de temps de vol 8 (ou TOF pour *Time Of Flight)*.

L'unité de localisation 7 fournit une localisation géométrique relative du smartphone 2. Dans un mode de réalisation, l'unité de localisation 7 comporte des capteurs inertiels comprenant ici un accéléromètre trois axes, un gyromètre trois axes et un compas trois axes. Les capteurs inertiels sont intégrés dans un même composant de mesure inertielle 9 (par exemple le LSM9DS1 de *STMicroelectronics*). L'unité de localisation 7 comprend aussi un module logiciel de calcul intégré dans un deuxième composant de traitement 11 de l'unité de traitement 4 et destiné à mettre en oeuvre un procédé de calcul inertiel. Le composant de mesure inertielle 9 et le deuxième composant de traitement 11 de l'unité de traitement 4 sont reliés ici par une liaison série (par exemple par un bus I$^2$C). Dans d'autres exemples, l'unité de localisation 7 comporte un capteur inertiel de structure relativement simple ne comprenant qu'un accéléromètre ou ne comprenant qu'un gyromètre.

L'unité de localisation 7 produit donc des premières mesures de distance entre la passerelle résidentielle 1 et le smartphone 2, qui sont obtenues à partir de mesures inertielles produites par le composant de mesure inertielle 9 du smartphone 2.

L'unité de mesure de temps de vol 8 comprend un module d'émission et de réception de signaux UWB 12 et un troisième composant de traitement 14 intégré dans l'unité de traitement 4. L'unité de mesure de temps de vol 8 coopère avec l'ancre UWB 3 de la passerelle résidentielle 1 pour effectuer des mesures de temps de vol qui sont elles-mêmes utilisées pour produire des deuxièmes mesures de distance entre le smartphone 2 et la passerelle résidentielle 1. Ici, la fréquence de fonctionnement des modules UWB de mesure de TOF est égale à 4GHz (mais elle pourrait bien sûr être différente).

Les mesures de temps de vol utilisent donc des signaux UWB. La solution de localisation DECAWAVE MDEK1001 est ici mise en oeuvre. Le module d'émission et de réception de signaux UWB 12 est par exemple le composant DECAWAVE DW1000.

Le troisième composant de traitement 14 est par exemple le microcontrôleur NORDIC contenant un *firmware* DECAWAVE permettant d'exploiter le composant DECAWAVE DW1000. Les deux composants communiquent entre eux via une liaison série.

Les deuxièmes mesures de distance sont basées sur la connaissance d'un temps de vol de signaux UWB échangés avec l'ancre UWB 3 de la passerelle résidentielle 1. L'unité de mesure de temps de vol 8 produit également une mesure de l'atténuation du signal électromagnétique reçu de l'ancre UWB 3.

Le smartphone 2 est ainsi déplacé par un utilisateur dans un certain espace, par exemple dans l'habitation de l'utilisateur, pour détecter et évaluer la nature d'obstacles présents dans ledit espace. Les obstacles comprennent par exemple un mur 15, une cloison, etc.

Dans le système qui vient d'être décrit, c'est donc le smartphone 2 qui réalise les premières mesures de distance (inertielles) et les deuxièmes mesures de distance (par mesures de temps de vol).

On notera que les mesures de temps de vol et les deuxièmes mesures de distance peuvent également être réalisées par l'ancre UWB 3 de la passerelle résidentielle 1. Ces mesures de distance devront être communiquées à l'application locale du smartphone 2 qui acquiert aussi les informations de localisation géométrique relative (et notamment les premières mesures de distance).

Le procédé de détection et de caractérisation d'obstacle selon des modes de réalisation débute par une étape d'initialisation, qui consiste à définir un point d'origine des premières mesures de distance et des deuxièmes mesures de distance. Le point d'origine est défini lorsque la position courante du smartphone 2 est la position de référence dans laquelle se trouve la passerelle résidentielle 1.

Pour définir le point d'origine, l'application locale fait positionner par l'utilisateur le smartphone 2 dans la position de référence, c'est-à-dire sur la passerelle résidentielle 1.

L'utilisateur initialise alors le procédé de détection et de caractérisation d'obstacle en appuyant sur un bouton de l'application locale.

Alternativement, la passerelle résidentielle 1 et/ou le smartphone 2 peuvent, pour définir le point d'origine, détecter automatiquement que le smartphone 2 se trouve dans la position de référence de la passerelle résidentielle 1. Cette détection automatique est réalisée par exemple à partir de mesures de distance obtenues via l'analyse de la force d'un signal radio reçu. Des mesures de RSSI (pour *Received Signal Strength Indication*) peuvent être utilisées.

L'unité de localisation 7 est alors réinitialisée à son origine, et est dès lors capable à chaque instant de positionner géométriquement le smartphone 2 par rapport au point d'origine. L'appui d'un bouton sur l'application locale permet de mettre en mémoire l'ensemble des paramètres du composant de mesure inertielle 9. Ces paramètres serviront de point de départ à l'intégration des paramètres. L'unité de localisation 7 peut ainsi calculer des premières mesures de distance, qui mesurent la distance absolue géométrique séparant le smartphone 2 du point d'origine.

Comme dans tout système de navigation inertielle, les déplacements sont mesurés par différence d'un point A à un point B en utilisant l'accélération linéaire 3D et l'accélération de rotation 3 axes par double intégration pour atteindre la position du point B à partir du point A.

Accessoirement, ces mesures peuvent être complétées par la mesure de compas qui est une mesure absolue de la rotation (puisque par rapport à un nord magnétique).

La distance absolue est donc déduite par l'intégration des paramètres d'accélération, de gyromètre et de compas suivant le principe général de la navigation inertielle.

Également, lorsque le smartphone 2 subit un mouvement suivant l'axe Z, il est possible de le corréler avec la mesure de pression qui enregistre de manière absolue de la hauteur.

L'unité de mesure de temps de vol 8 permet de vérifier que le smartphone 2 est bien positionné sur le point d'origine (distance TOF = 0).

Dès lors, au gré du déplacement de l'utilisateur menant au contournement des obstacles, et de façon cyclique (chaque seconde par exemple), les deux distances, géométrique (première mesure de distance) et TOF (deuxième mesure de distance), séparant le smartphone 2 et la passerelle résidentielle 1, sont calculées par l'application locale embarquée dans le smartphone 2.

L'unité de traitement 4 du smartphone 2 acquiert ainsi régulièrement des couples de mesures. Chaque couple de mesures est associé à une position courante du smartphone 2, et comprend une première mesure de distance et une deuxième mesure de distance.

Comme on l'a vu, les premières mesures de distance sont produites par le smartphone 2 via le capteur de mesure inertielle 9. Chaque première mesure de distance est obtenue à partir du format x1, y1, z1 de position dans l'espace qui peut se convertir en distance en cm, présentant une précision de l'ordre de quelques centimètres. Ce niveau de précision est satisfaisant dans ce contexte, car il permet de déduire une différence qui est donc produite par une différence de marche.

Les deuxièmes mesures de distance se présentent sous le format d'une longueur en cm et ont une précision de l'ordre du centimètre. A nouveau, ce niveau de précision est satisfaisant dans ce contexte car la différence de marche dans le mur est bien supérieure à l'erreur de mesure de la distance UWB.

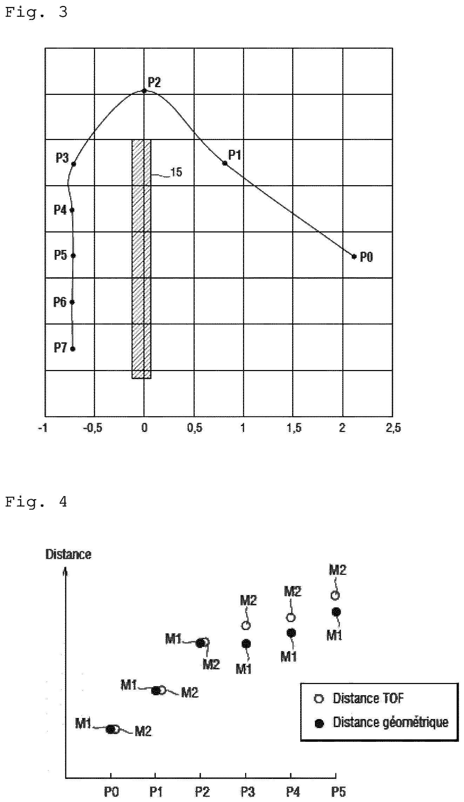

On voit sur la figure 3 le cheminement de l'utilisateur muni du smartphone 2, qui part du point d'origine P0 et, en passant par les points P1 à P7, contourne le mur 15.

En partant de la passerelle résidentielle 1 (position P0) puis en s'éloignant de celle-ci, l'utilisateur et donc le smartphone 2 sont tout d'abord en « line of sight » (« LOS »), c'est-à-dire en visée directe optique.

La deuxième mesure de distance (TOF), dans ces conditions, est simple à réaliser et très précise.

Par contre, dès lors qu'un obstacle formant un milieu absorbant s'intercale sur la ligne directe entre le smartphone 2 et la passerelle résidentielle 1 (le mur 15, à partir du point P3), la deuxième mesure de distance est allongée par l'effet de réfraction du matériau avec lequel est construit le mur, qui ralentit l'onde radio le traversant. La première mesure de distance (géométrique) reste représentative de la réalité.

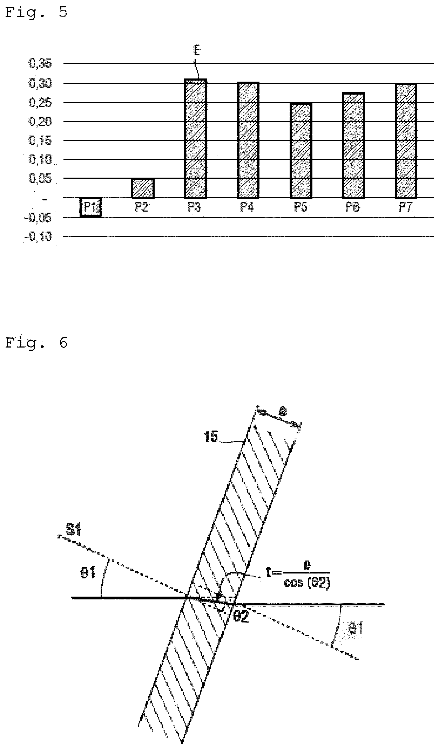

On voit sur les figures 4 et 5 que, tant qu'aucun obstacle n'est présent entre la passerelle résidentielle 2 et le smartphone 1, les premières mesures de distance M1 et les deuxièmes mesures de distance M2 sont sensiblement identiques. Sur la figure 5, on voit que l'erreur de distance E, égale ici à une différence entre la deuxième mesure de distance et la première mesure de distance, est très faible aux points P1 et P2.

Par contre, lorsque le smartphone 2 a été déplacé de sorte que le mur 15 est positionné entre la passerelle résidentielle 1 et le smartphone 2, l'erreur de distance E augmente (à partir du point P3).

L'unité de traitement 4 du smartphone 2 acquiert donc les premières mesures de distance et les deuxièmes mesures de distance. Pour chaque couple de mesures comprenant une première mesure de distance et une deuxième mesure de distance, l'unité de traitement 4 évalue l'erreur de distance E représentative de la différence entre la deuxième mesure de distance et la première mesure de distance dudit couple de mesures. Ici, l'erreur de distance E est égale à la différence entre la deuxième mesure de distance et la première mesure de distance.

L'unité de traitement 4 détecte alors, à partir de l'erreur de distance E, la présence d'un obstacle entre le smartphone 2 et la passerelle résidentielle 1, et évalue une ou des caractéristiques dudit obstacle.

Ainsi, l'unité de traitement 4 du smartphone 2 peut comparer l'erreur de distance E avec un seuil prédéterminé, et détecte la présence d'un obstacle si l'erreur de distance est supérieure au seuil prédéterminé.

La valeur du seuil prédéterminé est choisie en fonction de la précision des mesures de distance.

La localisation de la navigation inertielle, et donc la première mesure de distance, a une précision de l'ordre de quelques centimètres.

La précision de la deuxième mesure de distance (TOF avec UWB) est de l'ordre du centimètre.

Un mur plein de 20 cm avec un indice de réfraction de l'ordre de 3 conduit à une augmentation de parcours de 40 cm par rapport à la distance équivalente dans l'air.

On choisit un seuil prédéterminé égal à 20 cm ± 5 cm. Cette valeur est pertinente, car elle est supérieure à la somme des précisions de la première mesure de distance et de la deuxième mesure de distance, tout en étant inférieure à l'augmentation de parcours due au mur et impactant la deuxième mesure de distance.

Puis, l'unité de traitement 4 détermine une ou des caractéristiques de l'obstacle à partir de l'erreur de distance. Dans le cas d'un mur, les caractéristiques comprennent : une indication selon laquelle le mur est un mur creux ou un mur plein, l'indice de réfraction du mur, le matériau avec lequel a été construit le mur, et l'épaisseur du mur. On note que l'unité de traitement 4 pourrait se contenter de déterminer une ou plusieurs caractéristiques seulement parmi ces caractéristiques.

On note que l'angle d'incidence sur un obstacle de l'onde (ici le signal UWB) utilisée pour la deuxième mesure de distance, a peu d'influence.

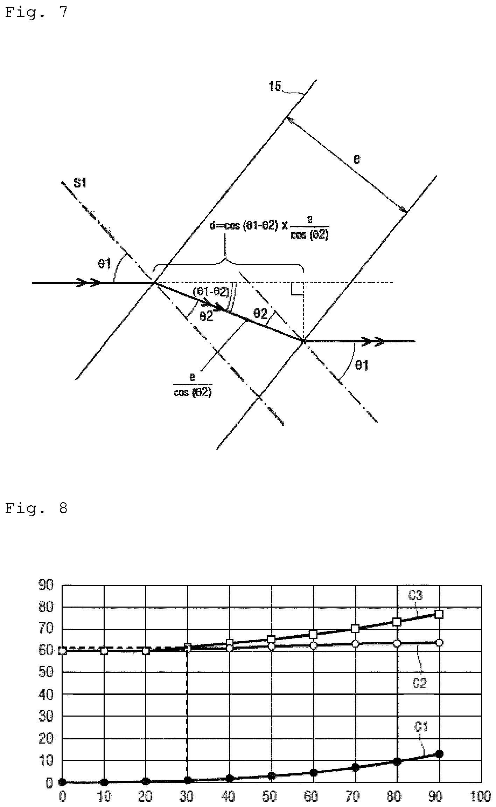

Sur les figures 6 et 7, le mur 15, d'épaisseur e, est modélisé par une lame à faces parallèles. Le mur 15 ne change pas la direction du signal UWB, mais produit un décalage latéral du signal UWB.

Le trajet, dans le mur 15, d'un signal pénétrant dans le mur 15 avec un angle d'incidence égal à 90°, a une longueur égale à e, c'est-à-dire à l'épaisseur du mur 15.

Le trajet t, dans le mur 15, d'un signal S1 pénétrant dans le mur 15 avec un angle d'incidence égal à $\theta 1$ et un angle de réfraction égal à $\theta 2$, a pour longueur :

$$t = e/\cos(\theta 2).$$

La distance d est égale à :

$$d = \cos(\theta 1 + \theta 2) \times e/\cos(\theta 1).$$

La figure 8 correspond à une situation dans laquelle l'onde chemine dans un mur ayant une épaisseur de 20 cm et un indice de réfraction égal à 3. Le chemin optique a une longueur égale à 60 cm pour un angle d'incidence de 0°.

La courbe C1 représente la variation de la longueur du chemin optique en fonction de l'angle d'incidence $\theta 1$.

La courbe C2 représente la longueur du trajet dans le matériau en fonction de l'angle d'incidence, et la courbe C3 la somme des deux courbes C1 et C2.

L'erreur est de 13 cm au maximum en incidence rasante sur la distance totale dans l'air.

L'angle d'incidence $\theta 1$ introduit donc une erreur maximale de mesure de TOF de l'ordre de 15 cm (en incidence rasante) et en pratique inférieure à 10 cm dans la majorité des cas, comparée à l'allongement de parcours (différence de distance) dans le matériau qui peut être, pour un mur en parpaing, de 40 cm.

On note aussi que, lorsqu'aucun obstacle n'est détecté, c'est-à-dire en situation de LOS, l'unité de traitement 4 (ou, plus précisément, le logiciel de l'application locale), peut recaler la première mesure de distance sur la deuxième mesure de distance.

En effet, la deuxième mesure de distance est réputée absolue, alors que la première mesure de distance est basée sur une intégration des mesures produites par le composant de mesure inertielle 9. La deuxième mesure de distance est donc plus précise.

La méthode de recalage utilise ici les coordonnées sphériques.

On fait en effet l'hypothèse que les angles $\theta$ et $\varphi$ ne changent pas.

Ainsi, à partir d'une deuxième mesure de distance $D_{UWB}$ issue de la mesure UWB, on peut déduire les nouvelles coordonnées du smartphone $x_1$, $y_1$, $z_1$ de la manière suivante :

$$x_1 = D_{UWB} * \sin \varphi * \cos \theta$$

$$y_1 = D_{UWB} * \sin \varphi * \cos \theta$$

$$z_1 = D_{UWB} * \cos \varphi$$

On s'intéresse maintenant à un exemple concret de mise en oeuvre du procédé de détection et de caractérisation d'obstacle selon des modes de réalisation.

On se focalise ici sur des murs pleins (murs porteurs par exemple), car l'influence sur les signaux UWB (et sur les signaux radio en général) des murs creux, tels que ceux qui comprennent deux plaques de plâtre, est relativement réduite. En effet, c'est l'épaisseur totale des matériaux d'un mur qui doit être prise en compte pour évaluer l'influence de ce mur.

Pour une cloison creuse ayant une épaisseur de 10 cm environ, et comprenant deux plaques de plâtre ayant chacune une épaisseur de 13 mm (BA13), ainsi qu'un espace de séparation de ces deux plaques de plâtre rempli par du carton alvéolé, seules les deux plaques de plâtre comptent dans l'atténuation et le ralentissement de signaux de type UWB, soit $2 \times 13$ mm = 26 mm de matériau à prendre en compte.

L'influence d'une cloison creuse est donc très faible par rapport à celle d'un mur plein dont l'épaisseur est de l'ordre de 200 mm.

L'utilisateur et donc le smartphone 2 sont tout d'abord en « line of sight » (« LOS »).

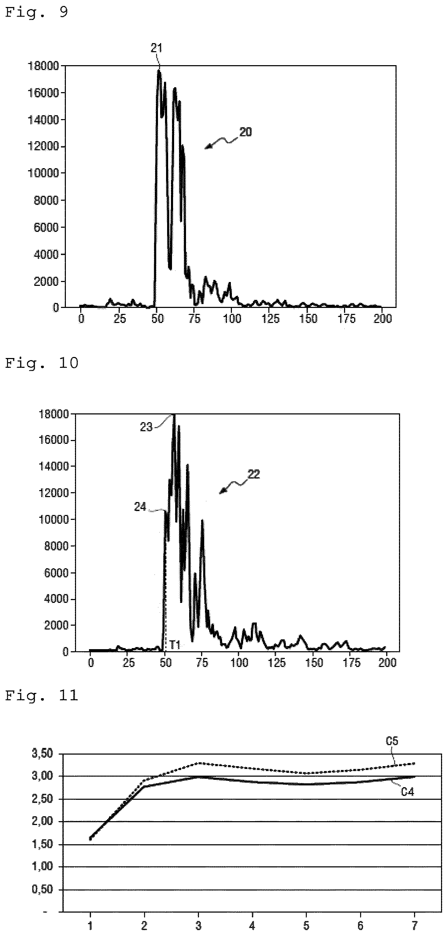

On voit sur la figure 9 le signal UWB 20 reçu par le smartphone après avoir été émis par l'ancre UWB 3 de la passerelle résidentielle 1. L'axe des X est le temps et l'axe des Y correspondent à des intensités relatives de réception de signaux.

Le signal UWB 20 comporte un premier pic 21 qui est suivi d'un ensemble de pics qui correspondent aux différentes réflexions. Le premier pic 21 se dégage nettement des autres pics qui sont issus des réflexions parasites diverses, mais qui arrivent plus tard que le premier pic 21.

Dans ce cas, le premier pic 21 est le plus puissant et sert à déterminer le temps de vol, et donc à produire la première mesure de distance. Seul le premier pic 21 est intéressant à mesurer, car c'est celui qui donne la distance réelle.

L'unité de traitement 4 du smartphone 2 déduit la première mesure de distance de ces coordonnées.

Puis, l'utilisateur contourne le mur 15.

On voit sur la figure 10 le signal UWB 22 reçu par le smartphone 2.

Le pic 23 a l'intensité la plus importante.

Cependant, c'est le premier pic 24, qui correspond au signal réfracté par le mur, qui est utilisé pour la deuxième mesure de distance. Le signal réfracté est celui qui arrive en premier par rapport aux autres signaux réfléchis, car ceux-ci parcourent une distance supérieure. Le premier pic 24 subit une atténuation lors du passage derrière le mur mais subit également un retard dû à la propagation dans le matériau (ralentissement du signal par réfraction).

Des algorithmes inclus dans la mesure UWB par le composant DECAWAVE / QORVO, permettent de seuiller, par exemple avec une valeur multiplicative du seuil de bruit, ce qui permet de se focaliser sur le signal réfracté (et donc de détecter le premier pic 24) même si celui-ci arrive avec une intensité plus faible.

Comme le trajet effectué par l'utilisateur entre le point est relativement lent (marche), le premier pic 24 peut être détecté en temps réel via un fenêtrage temporel centré sur la première mesure de distance.

Pour déterminer la deuxième mesure de distance, l'unité de traitement 4 acquiert donc le signal UWB 22, puis détecte le premier pic 24 du signal UWB 22 en utilisant un fenêtrage temporel centré sur un temps de référence T0 obtenu à partir de la première mesure de distance. L'unité de traitement 4 produit alors la deuxième mesure de distance à partir d'un temps de survenue T1 du premier pic 24.

Ce fenêtrage temporel se cale donc sur une fenêtre (T0 +/- ε) autour de l'estimée de distance de point à point entre le smartphone et la passerelle résidentielle, obtenue par la navigation inertielle du smartphone 2.

Ce dispositif de fenêtrage permet de compléter des algorithmes déjà connus, comme par exemple ceux décrits dans la note d'application « DECAWAVE - APS006 PART 3 APPLICATION NOTE ».

Par ailleurs, l'aspect « optique » de la propagation de l'onde UWB entraine un ralentissement de l'onde dans le matériau.

On constate donc non seulement une atténuation, comme vu ci-dessus, mais aussi un décalage du pic vers de plus hautes valeurs de distance.

L'unité de traitement 4 compare donc la distance UWB avec la distance obtenue par navigation inertielle.

La liste qui suit correspond à différents points (P1, P2, ..., P6) par lesquels est passé l'utilisateur muni du smartphone 2, ainsi que les premières mesures de distance, les deuxièmes mesures de distance et, pour chaque couple de mesures comprenant une première mesure de distance et une deuxième mesure de distance, l'erreur de distance correspondante :

| | | | |
|---|---|---|---|
| P1 : | 1,65 ; | 1,6 ; | -0,05 |
| P2 : | 2,77 ; | 2,91 ; | 0,14 |
| P3 : | 2,99 ; | 3,3 ; | 0,31 |
| P4 : | 2,88 ; | 3,18 ; | 0,30 |
| P5 : | 2,82 ; | 3,07 ; | 0,25 |
| P6 : | 2,88 ; | 3,15 ; | 0,27 |

On voit sur la figure 11 une courbe C4 des premières mesures de distance et une courbe C5 des deuxièmes mesures de distance.

Avant le mur, l'erreur de distance est presque nulle (aux erreurs de mesures près). Après le mur, la deuxième mesure de distance est entachée d'une erreur d'environ +30 cm.

L'erreur de distance permet d'évaluer des caractéristiques de l'obstacle (le mur). On utilise des abaques qui permettent de déterminer la nature des murs : murs secs (cloisons sèches de type plaques de plâtre BA13), mur de briques maçonnées, mur de béton armé, etc...

Pour déterminer les caractéristiques du mur à partir de l'erreur de distance, l'unité de traitement 4 acquiert une valeur d'épaisseur préalablement définie et susceptible de correspondre à l'épaisseur du mur. Cette valeur est une valeur mémorisée, qui est par exemple stockée dans la mémoire 6 de l'unité de traitement 4, ou bien dans une mémoire de la passerelle résidentielle 1, ou bien sur le *cloud,* etc.

La valeur d'épaisseur préalablement définie correspond à l'épaisseur la plus probable du mur dans une habitation telle que celle de l'utilisateur.

Ici, la valeur d'épaisseur préalablement définie correspond à l'épaisseur d'un mur standard, soit 20 cm.

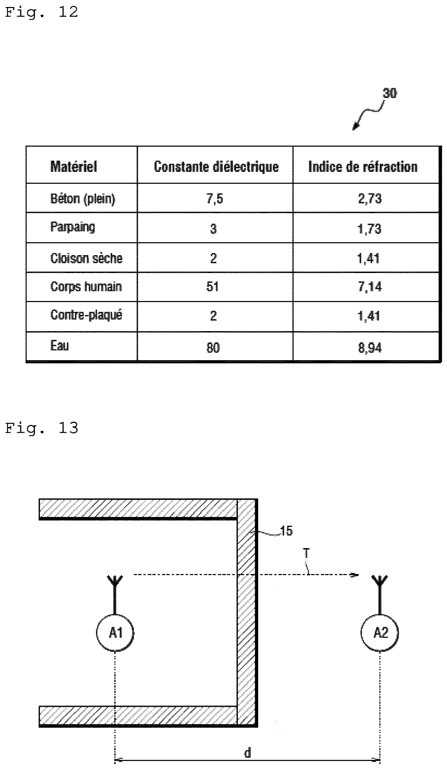

L'unité de traitement 4 calcule un indice de réfraction approché du mur à partir de la valeur d'épaisseur préalablement définie et de l'erreur de distance. L'unité de traitement 4 détermine, dans une table comprenant une pluralité d'indices de réfraction prédéfinis associés chacun à un matériau prédéfini, un indice de réfraction consolidé qui est le plus proche de l'indice de réfraction approché. L'unité de traitement 4 en déduit le matériau avec lequel a été construit le mur. La table est par exemple semblable à la table 30 de la figure 12. Cette table 30 est prédéfinie et mémorisée.

Pour calculer l'indice de réfraction approché du mur, l'unité de traitement 4 utilise la formule :

$$\Delta d = W \times (R-1),$$

où $\Delta d$ est l'erreur de distance, W est la valeur d'épaisseur préalablement définie du mur, et R est l'indice de réfraction approché.

Cette formule est obtenue de la manière suivante.

En référence à la figure 13, on se place dans le cas du NLOS (pour *Non Line Of Sight*). Un signal UWB est émis par l'équipement A1 et reçu par l'équipement A2. Un mur 15 est situé entre l'équipement A1 et l'équipement A2. L'équipement A2 est positionné à une distance d de l'équipement A1. Le trajet direct est le trajet T. La propagation du signal UWB est perturbée. Cette perturbation se traduit en particulier par une atténuation du premier pic dans le signal UWB reçu, qui sert à déterminer la distance réelle.

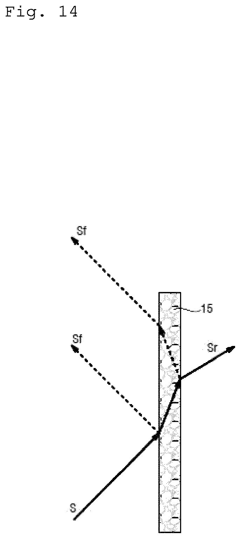

On distingue sur la figure 14 le signal réfracté Sr et des signaux réfléchis Sf issus de la traversée du mur 15 par le signal UWB S. Le trajet direct passe directement dans le mur, comme le ferait un trajet optique dans une lame de verre.

Au cours de la traversée du mur, le signal UWB S est atténué, ce qui entraîne une réduction de la portée radio, qui elle-même entraîne une atténuation du signal du trajet direct. De plus, des erreurs de temps de vol sont présentes, qui sont dues à la traversée du milieu. En effet le matériau ralentit la vitesse de l'onde électromagnétique.

L'équation suivante modélise l'atténuation du signal :

$$P_R[dBm] = P_T[dBm] + G[dB] - L[dB] - 20 \log_{10}(4\pi f_c(d_1+d_2)/c) - L_{MATERIAL}[dB],$$

où d1 est la distance en espace libre entre l'équipement A1 et le mur 15, d2 est la distance en espace libre entre le mur 15 et l'équipement A2, et $L_{MATERIAL}$ est la perte dans le mur.

Le temps de propagation, en fonction de la distance entre les 2 points d'émission et de réception, est calculé à partir des formules suivantes :

$$TOF = \frac{d - w}{c} + \frac{w \times R}{c}$$

$$TOF = \frac{d + w \times (R-1)}{c}$$

$$d' = \text{TOF x c} = d + w \times (R - 1)$$

où TOF est le temps de vol entre A1 et A2, d est la distance physique entre A1 et A2 en mètres, d' est la distance calculée entre A1 et A2, c est la vitesse de la lumière en m/s en espace libre, le terme c/R représente la réduction de la vitesse des signaux radio à travers le mur, W est l'épaisseur du mur et R est l'indice de réfraction du mur.

La distance est donc affectée par le facteur additionnel suivant (par rapport à une mesure en espace libre) :

$$W \times (R-1).$$

L'unité de traitement 4 estime alors l'indice de réfraction approché R en calculant :

$$R = \Delta d \,/\, W + 1,$$

où $\Delta d$ est l'erreur de distance.

On trouve ici : R = 2,5.

Pour identifier, à partir de l'indice de réfraction approché du mur 15, le matériau avec lequel a été construit le mur, l'unité de traitement 4 utilise une table telle que la table 30 de la figure 12.

L'unité de traitement 4 identifie, dans la table, un indice de réfraction consolidé qui se rapproche le plus de 2,5. Il s'agit ici du béton armé dont l'indice de réfraction est égal à 2,73.

L'unité de traitement 4 évalue alors une épaisseur réelle du mur à partir de l'erreur de distance et de l'indice de réfraction consolidé.

L'épaisseur réelle du mur 15 est égale à :

$$W = \Delta d \,/\, (2,73-1) = 17 \text{ cm.}$$

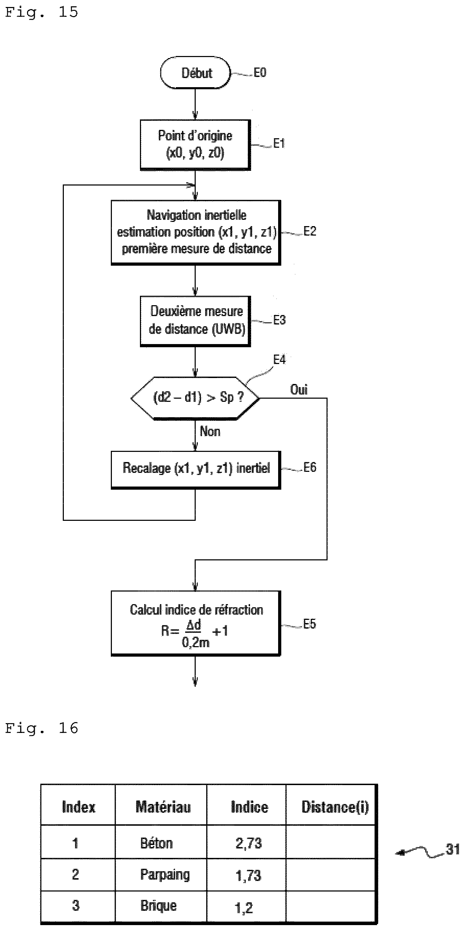

Le diagramme de la figure 15 résume les différentes étapes du procédé de calibration selon des modes de réalisation.

Suite à une étape de départ (étape E0), l'unité de traitement 4 met en oeuvre l'étape d'initialisation et définit le point d'origine $(x_0, y_0, z_0)$ des premières mesures de distance et des deuxièmes mesures de distance (étape E1).

Puis, pour une position courante donnée du smartphone 2, l'unité de traitement 4 acquiert la position (x1, y1, z1) du smartphone 2 grâce au composant de mesure inertielle 9, puis estime la première mesure de distance (étape E2).

L'unité de traitement 4 acquiert ensuite la deuxième mesure de distance (étape E3).

L'unité de traitement 4 évalue alors l'erreur de distance égale à la différence entre la deuxième mesure de distance et la première mesure de distance, puis compare l'erreur de distance avec le seuil prédéterminé (étape E4).

Ainsi, si :

$$(d2 - d1) = \Delta d > Sp,$$

où d2 est la deuxième mesure de distance, d1 est la première mesure de distance, $\Delta d$ est l'erreur de distance, et Sp est le seuil prédéterminé, l'unité de traitement 4 détecte la présence d'un obstacle entre la passerelle résidentielle 1 et le smartphone 2.

L'unité de traitement 4 calcule alors l'indice de réfraction du mur (étape E5) :

$$R = \Delta d \,/\, W + 1,$$

soit, avec W = 20 cm :

$$R = \Delta d \,/\, 0,2 \text{ m} + 1.$$

A l'étape E4, si la condition (d2 - d1) > Sp n'est pas vérifiée, l'unité de traitement 4 recale la première mesure de distance sur la deuxième mesure de distance (étape E6). Le procédé repasse alors à l'étape E2.

On décrit maintenant la manière dont est déterminé l'indice de réfraction consolidé.

On illustre la détermination de l'indice de réfraction consolidé en considérant la table 31 de la figure 16. La table 31 comprend trois indices de réfraction prédéfinis associés chacun à un matériau distinct. Chaque indice de réfraction prédéfini est de plus associé à un index variant de 1 à 3 et correspondant à sa position dans la table 31.

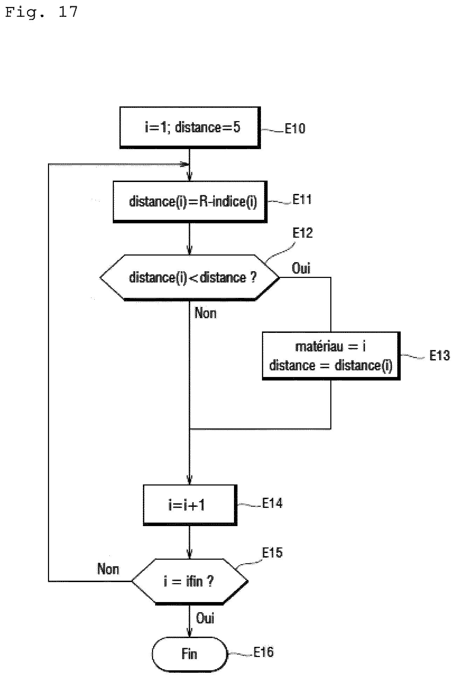

Les variables, constantes et fonctions suivantes sont utilisées dans l'algorithme de la figure 17 :
*i* ; *ifin* (le nombre total d'indices de réfraction prédéfinis contenus dans la table, ici égal à 3) ; *distance* ; *distance(i)* ; *indice(i)* et *matériau.*

Le procédé débute par une étape d'initialisation au cours de laquelle la variable *i* est initialisée à 1 et la variable *distance* à 5 (valeur arbitraire) : étape E10.

Le procédé évalue alors une fonction *distance(i)* représentative d'une distance entre l'indice de réfraction approché *R* et l'indice de réfraction *indice(i)* dont la position dans la table est égale à *i* (étape E11) :

$$distance(i) = R - indice\ (i).$$

Le procédé compare alors *distance(i)* avec *distance.*

$$Si\ distance(i) < distance,$$

alors la variable *matériau* prend la valeur de *i,* et *distance* prend la valeur *distance(i).*

Le procédé passe à l'étape E13, où *i* est incrémentée :

$$i = i + 1\ (étape\ E14).$$

A l'étape E12, si la condition n'est pas vérifiée, alors le procédé passe directement à l'étape E14.

Puis, à l'étape E15, si *i = ifin,* alors le procédé s'achève (étape E16). Sinon, le procédé repasse à l'étape E11.

La détermination de l'indice de réfraction consolidé consiste donc à déterminer, parmi les indices de réfraction prédéfinis de la table 31, l'indice de réfraction prédéfini particulier qui minimise une fonction représentative d'une distance entre l'indice de réfraction approché et les indices de réfraction prédéfinis.

L'unité de traitement 4 en déduit que le matériau qui a été utilisé pour fabriquer le mur est celui qui, dans la table, correspond à l'indice de réfraction consolidé.

On note que la fonction représentative de la distance pourrait être différente de celle décrite ici. On pourrait avoir par exemple :

$$d(i) = \sqrt{(R^2 + indice(i)^2)}.$$

Cette distance est une distance euclidienne qui permet de traiter les cas de distances négatives.

Bien entendu, l'invention n'est pas limitée aux modes de réalisation décrits mais englobe toutes variantes entrant dans le champ de l'invention telle que définie par les revendications.

On a décrit ici que l'application permettant de mettre en oeuvre le procédé de détection et de caractérisation d'obstacle selon un mode de réalisation est une application locale. Dans un autre mode de réalisation, une application déportée pourrait aussi être utilisée. L'invention n'est donc pas nécessairement entièrement mise en oeuvre dans le smartphone, c'est-à-dire dans le terminal mobile, mais pourrait être mise en oeuvre au moins partiellement dans l'équipement de référence ou à distance (sur un serveur du *cloud* par exemple).

L'équipement de référence n'est pas nécessairement une passerelle résidentielle mais pourrait être un équipement différent, par exemple un boîtier décodeur. De même, le terminal mobile n'est pas nécessairement un smartphone, mais pourrait être un équipement différent, par exemple une tablette.

L'architecture de la passerelle résidentielle et du smartphone pourraient être différentes de celles décrites ici. En particulier, en ce qui concerne le smartphone, différentes fonctions réalisées par l'unité de traitement pourraient être mises en oeuvre par un ou des composants de traitement agencés différemment.

Les mesures de temps de vol pourraient utiliser des signaux autres que des signaux UWB : autres signaux radio, signaux acoustiques, etc.

On note que les valeurs contenues dans les tables 30 et 31 correspondent à la fréquence de fonctionnement de 4 GHz des modules UWB de mesure de TOF. Bien sûr, d'autres fréquences sont possibles comme par exemple la bande des 6,5 GHz voire la bande des 8 GHz. Bien entendu, les indices des matériaux des tables 30 et 31, valables à 4 GHz, seront modifiés en fonction de mesures faites à ces fréquences de fonctionnement, sans pour autant que les mises en oeuvre des modes de réalisation décrits ici ne soient impactées.

**Revendications**

1. Procédé de détection et de caractérisation d'obstacle, comprenant les étapes de :

  - acquérir au moins un couple de mesures, chaque couple de mesures étant associé à une position courante d'un terminal mobile (2) et comprenant une première mesure de distance et une deuxième mesure de distance entre ledit terminal mobile et un équipement de référence (1), chaque première mesure de distance étant obtenue à partir d'au moins une mesure inertielle produite par au moins un capteur inertiel (9) du terminal mobile (2), chaque deuxième mesure de distance étant obtenue à partir d'au moins une mesure de temps de vol ;
  - pour chaque couple de mesures :

    o évaluer une erreur de distance (E) représentative d'une différence entre la deuxième mesure de distance et la première mesure de distance dudit couple de mesures ;
    o à partir de l'erreur de distance, détecter la présence d'un obstacle (15) entre le terminal mobile et l'équipement de référence, et déterminer une ou des caractéristiques dudit obstacle.

2. Procédé de détection et de caractérisation d'obstacle selon la revendication 1, dans lequel les mesures de temps de vol utilisent des signaux UWB, l'équipement de référence intégrant une ancre UWB (3).

3. Procédé de détection et de caractérisation d'obstacle selon l'une des revendications précédentes, comprenant en outre l'étape de comparer l'erreur de distance avec un seuil prédéterminé, et de détecter la présence de l'obstacle si l'erreur de distance est supérieure au seuil prédéterminé.

4. Procédé de détection et de caractérisation d'obstacle selon l'une des revendications précédentes, dans lequel l'obstacle est un mur (15) et dans lequel les caractéristiques de l'obstacle comprennent une indication selon laquelle le mur est un mur creux ou un mur plein et/ou un indice de réfraction du mur et/ou un matériau avec lequel a été construit le mur et/ou une épaisseur du mur.

5. Procédé de détection et de caractérisation d'obstacle selon la revendication 4, comprenant en outre les étapes de :

  - acquérir une valeur d'épaisseur préalablement définie et susceptible de correspondre à l'épaisseur du mur (15) ;
  - calculer un indice de réfraction approché du mur à partir de la valeur d'épaisseur préalablement définie et de l'erreur de distance ;
  - déterminer, dans une table (30, 31) contenant une pluralité d'indices de réfraction prédéfinis associés chacun à un matériau prédéfini, un indice de réfraction consolidé qui est le plus proche de l'indice de réfraction approché, et en déduire le matériau avec lequel a été construit le mur.

6. Procédé de détection et de caractérisation d'obstacle selon la revendication 5, dans lequel la détermination de l'indice de réfraction consolidé consiste à déterminer, parmi les indices de réfraction prédéfinis, un indice de réfraction prédéfini particulier qui minimise une fonction représentative d'une distance entre l'indice de réfraction approché et les indices de réfraction prédéfinis de la table.

7. Procédé de détection et de caractérisation d'obstacle selon la revendication 6, dans lequel la distance est une distance euclidienne.

8. Procédé de détection et de caractérisation d'obstacle selon la revendication 5, comprenant en outre l'étape d'évaluer une épaisseur réelle du mur à partir de l'erreur de distance et de l'indice de réfraction consolidé.

9. Procédé de détection et de caractérisation d'obstacle selon l'une des revendications précédentes, comprenant en outre l'étape, si aucun obstacle n'est détecté entre le terminal mobile (2) et l'équipement de référence (1), de recaler la première mesure de distance sur la deuxième mesure de distance.

10. Procédé de détection et de caractérisation d'obstacle selon la revendication 2, dans lequel la détermination de la deuxième mesure de distance comprend les étapes :

- d'acquérir un signal UWB (20 ; 22) ;
- de détecter un premier pic (21 ; 24) du signal UWB en utilisant un fenêtrage temporel centré sur un temps de référence obtenu à partir de la première mesure de distance ;
- de produire la deuxième mesure de distance à partir d'un temps de survenue (T1) du premier pic.

11. Procédé de détection et de caractérisation d'obstacle selon l'une des revendications précédentes, comprenant en outre une étape d'initialisation consistant à définir un point d'origine des premières mesures de distance et des deuxièmes mesures de distance, le point d'origine étant défini lorsque la position courante du terminal mobile (2) est une position de référence dans laquelle se trouve l'équipement de référence (1).

12. Procédé de détection et de caractérisation d'obstacle selon la revendication 11, comprenant l'étape de faire positionner par un utilisateur le terminal mobile dans la position de référence pour définir le point d'origine.

13. Procédé de détection et de caractérisation d'obstacle selon la revendication 11, comprenant l'étape de détecter automatiquement que le terminal mobile se trouve dans la position de référence pour définir le point d'origine.

14. Procédé de détection et de caractérisation d'obstacle selon l'une des revendications précédentes, dans lequel le terminal mobile est un smartphone (2).

15. Procédé de détection et de caractérisation d'obstacle selon l'une des revendications précédentes, dans lequel l'équipement de référence est une passerelle résidentielle (1) .

16. Terminal mobile comprenant une unité de localisation (7) agencée pour produire les premières mesures de distance, une unité de mesure de temps de vol (8) agencée pour produire les deuxièmes mesures de distance, et une unité de traitement (4) dans laquelle est mis en oeuvre le procédé de détection et de caractérisation d'obstacle selon l'une des revendications précédentes.

17. Programme d'ordinateur comprenant des instructions qui conduisent l'unité de traitement (4) du terminal mobile (2) selon la revendication 16 à exécuter les étapes du procédé de détection et de caractérisation d'obstacle selon l'une des revendications 1 à 15.

18. Support d'enregistrement lisible par ordinateur, sur lequel est enregistré le programme d'ordinateur selon la revendication 17.


**Patentansprüche**

1. Verfahren zur Erkennung und Charakterisierung eines Hindernisses, umfassend die Schritte:

    - Erfassen mindestens eines Paares von Messungen, wobei jedes Paar von Messungen mit einer aktuellen Position eines mobilen Endgeräts (2) verbunden ist und eine erste Abstandsmessung und eine zweite Abstandsmessung zwischen dem genannten mobilen Endgerät und einer Referenzausrüstung (1) umfasst, wobei jede erste Abstandsmessung aus mindestens einer Trägheitsmessung gewonnen wird, die von mindestens einem Trägheitssensor (9) des mobilen Endgeräts (2) erzeugt wird, wobei jede zweite Abstandsmessung aus mindestens einer Flugzeitmessung gewonnen wird;
    - für jedes Paar von Messungen:

        o Evaluieren eines Abstandsfehlers (E), der repräsentativ für eine Differenz zwischen der zweiten Abstandsmessung und der ersten Abstandsmessung des genannten Paares von Messungen ist;
        o anhand des Abstandsfehlers, Erkennen des Vorhandenseins eines Hindernisses (15) zwischen dem mobilen Endgerät und der Referenzausrüstung, und Bestimmen einer oder mehr Eigenschaften des genannten Hindernisses.

2. Verfahren zur Erkennung und Charakterisierung eines Hindernisses nach Anspruch 1, bei dem die Flugzeitmessungen UWB-Signale verwenden, wobei in der Referenzausrüstung ein UWB-Anker (3) integriert ist.

3. Verfahren zur Erkennung und Charakterisierung eines Hindernisses nach einem der vorhergehenden Ansprüche, ferner umfassend den Schritt des Vergleichens des Abstandsfehlers mit einem vorbestimmten Schwellenwert, und des Erkennens des Vorhandenseins des Hindernisses, wenn der Abstandsfehler größer als der vorbestimmte Schwellenwert ist.

4. Verfahren zur Erkennung und Charakterisierung eines Hindernisses nach einem der vorhergehenden Ansprüche, bei dem das Hindernis eine Wand (15) ist und bei dem die Eigenschaften des Hindernisses eine Angabe, gemäß der die Wand eine Hohlwand oder eine Massivwand ist, und/oder einen Brechungsindex der Wand und/oder ein Material, aus dem die Wand konstruiert wurde, und/oder eine Dicke der Wand umfassen.

5. Verfahren zur Erkennung und Charakterisierung eines Hindernisses nach Anspruch 4, ferner umfassend die Schritte:

   - Erfassen eines Dickewerts, der vorab definiert wurde und wahrscheinlich der Dicke der Wand (15) entspricht;
   - Berechnen eines ungefähren Brechungsindexes der Wand anhand des vorab definierten Dickewerts und des Abstandsfehlers;
   - Bestimmen, in einer Tabelle (30, 31), die eine Vielzahl von vordefinierten Brechungsindizes enthält, die jeweils mit einem vordefinierten Material verbunden sind, eines konsolidierten Brechungsindexes, der dem ungefähren Brechungsindex am nächsten ist, und daraus Ableiten des Materials, aus dem die Wand konstruiert worden ist.

6. Verfahren zur Erkennung und Charakterisierung eines Hindernisses nach Anspruch 5, bei dem die Bestimmung des konsolidierten Brechungsindexes darin besteht, unter den vordefinierten Brechungsindizes einen besonderen vordefinierten Brechungsindex zu bestimmen, der eine Funktion, die repräsentativ für einen Abstand zwischen dem ungefähren Brechungsindex und den vordefinierten Brechungsindizes der Tabelle ist, minimiert.

7. Verfahren zur Erkennung und Charakterisierung eines Hindernisses nach Anspruch 6, bei dem der Abstand ein euklidischer Abstand ist.

8. Verfahren zur Erkennung und Charakterisierung eines Hindernisses nach Anspruch 5, ferner umfassend den Schritt des Evaluierens einer tatsächlichen Dicke der Wand anhand des Abstandsfehlers und des konsolidierten Brechungsindexes.

9. Verfahren zur Erkennung und Charakterisierung eines Hindernisses nach einem der vorhergehenden Ansprüche, ferner umfassend den Schritt, sofern kein Hindernis zwischen dem mobilen Endgerät (2) und der Referenzausrüstung (1) erkannt wurde, des erneuten Einstellens der ersten Abstandsmessung auf die zweite Abstandsmessung.

10. Verfahren zur Erkennung und Charakterisierung eines Hindernisses nach Anspruch 2, bei dem die Bestimmung der zweiten Abstandsmessung die Schritte umfasst:

    - Erfassen eines UWB-Signals (20; 22);
    - Erkennen eines ersten Peaks (21; 24) des UWB-Signals, indem ein Zeitfenster verwendet wird, das auf eine Referenzzeit zentriert ist, die aus der ersten Abstandsmessung gewonnen wird;
    - Erzeugen der zweiten Abstandsmessung anhand einer Zeit (T1) des Auftretens des ersten Peaks.

11. Verfahren zur Erkennung und Charakterisierung eines Hindernisses nach einem der vorhergehenden Ansprüche, ferner umfassend einen Initialisierungsschritt, der darin besteht, einen Ursprungspunkt der ersten Abstandsmessungen und der zweiten Abstandsmessungen zu definieren, wobei der Ursprungspunkt definiert wird, wenn die aktuelle Position des mobilen Endgeräts (2) eine Referenzposition ist, in der sich die Referenzausrüstung (1) befindet.

12. Verfahren zur Erkennung und Charakterisierung eines Hindernisses nach Anspruch 11, umfassend den Schritt des Positionierens des mobilen Endgeräts durch einen Benutzer in der Referenzposition, um den Ursprungspunkt zu definieren.

13. Verfahren zur Erkennung und Charakterisierung eines Hindernisses nach Anspruch 11, umfassend den Schritt des automatischen Erkennens, dass sich das mobile Endgerät in der Referenzposition befindet, um den Ursprungspunkt zu definieren.

14. Verfahren zur Erkennung und Charakterisierung eines Hindernisses nach einem der vorhergehenden Ansprüche, bei dem das mobile Endgerät ein Smartphone (2) ist.

15. Verfahren zur Erkennung und Charakterisierung eines Hindernisses nach einem der vorhergehenden Ansprüche, bei dem die Referenzausrüstung ein Residental Gateway (1) ist.

**16.** Mobiles Endgerät, umfassend eine Lokalisierungseinheit (7), die ausgebildet ist, die ersten Abstandsmessungen zu erzeugen, eine Flugzeitmesseinheit (8), die ausgebildet ist, die zweiten Abstandsmessungen zu erzeugen, und eine Verarbeitungseinheit (4), in der das Verfahren zur Erkennung und Charakterisierung eines Hindernisses nach einem der vorhergehenden Ansprüche durchgeführt wird.

**17.** Computerprogramm, umfassend Anweisungen, die die Verarbeitungseinheit (4) des mobilen Endgeräts (2) nach Anspruch 16 veranlassen, die Schritte des Verfahrens zur Erkennung und Charakterisierung eines Hindernisses nach einem der Ansprüche 1 bis 15 auszuführen.

**18.** Computerlesbarer Aufzeichnungsträger, auf dem das Computerprogramm nach Anspruch 17 gespeichert ist.

**Claims**

**1.** Obstacle detection and characterisation method, comprising the steps of:

acquiring at least one pair of measurements, each pair of measurements being associated with a current position of a mobile terminal (2) and comprising a first distance measurement and a second distance measurement between said mobile terminal and a reference equipment item (1), each first distance measurement being obtained from at least one inertial measurement produced by at least one inertial sensor (9) of the mobile terminal (2), each second distance measurement being obtained from at least one time of flight measurement; for each pair of measurements:

o evaluating a distance error (E) representative of a difference between the second distance measurement and the first distance measurement of said pair of measurements;
o from the distance error, detecting the presence of an obstacle (15) between the mobile terminal and the reference equipment, and determining one or more characteristics of said obstacle.

**2.** Obstacle detection and characterisation method according to claim 1, wherein the time of flight measurements use UWB signals, the reference equipment integrating a UWB anchor (3) .

**3.** Obstacle detection and characterisation method according to one of the preceding claims, further comprising the step of comparing the distance error with a predetermined threshold, and of detecting the presence of the obstacle if the distance error is greater than the predetermined threshold.

**4.** Obstacle detection and characterisation method according to one of the preceding claims, wherein the obstacle is a wall (15) and wherein the characteristics of the obstacle comprise an indication according to which the wall is a hollow wall or a solid wall and/or a refraction index of the wall and/or a material with which the wall has been built and/or a thickness of the wall.

**5.** Obstacle detection and characterisation method according to claim 4, further comprising the steps of:

acquiring a thickness value defined beforehand and likely to correspond to the thickness of the wall (15);
calculating an approximate refraction index of the wall from the thickness value defined beforehand and from the distance error;
determining, in a table (30, 31) containing a plurality of predefined refraction indices, each associated with a predefined material, a consolidated refraction index which is closest to the approximate refraction index, and by deducing from it, the material with which the wall has been built.

**6.** Obstacle detection and characterisation method according to claim 5, wherein the determination of the consolidated refraction index consists of determining, from among the predefined refraction indices, a particular predefined refraction index which minimises a function representative of a distance between the approximate refraction index and the predefined refraction indices of the table.

**7.** Obstacle detection and characterisation method according to claim 6, wherein the distance is a Euclidean distance.

8. Obstacle detection and characterisation method according to claim 5, further comprising the step of evaluating an actual thickness of the wall from the distance error and from the consolidated refraction index.

9. Obstacle detection and characterisation method according to one of the preceding claims, further comprising the step, if no obstacle is detected between the mobile terminal (2) and the reference equipment (1), of readjusting the first distance measurement over the second distance measurement.

10. Obstacle detection and characterisation method according to claim 2, wherein the determination of the second distance measurement comprises the steps:

of acquiring a UWB signal (20; 22);
of detecting a first peak (21; 24) of the UWB signal by using a time window centred on a reference time obtained from the first distance measurement;
of producing the second distance measurement from an occurrence time (T1) of the first peak.

11. Obstacle detection and characterisation method according to one of the preceding claims, further comprising an initialisation step consisting of defining a point of origin of the first distance measurements and of the second distance measurements, the point of origin being defined when the current position of the mobile terminal (2) is a reference position, wherein the reference equipment (1) is located.

12. Obstacle detection and characterisation method according to claim 11, comprising the step of positioning, by a user, the mobile terminal in the reference position to define the point of origin.

13. Obstacle detection and characterisation method according to claim 11, comprising the step of automatically detecting that the mobile terminal is located in the reference position to define the point of origin.

14. Obstacle detection and characterisation method according to one of the preceding claims, wherein the mobile terminal is a smartphone (2).

15. Obstacle detection and characterisation method according to one of the preceding claims, wherein the reference equipment is a residential gateway (1).

16. Mobile terminal comprising a localisation unit (7) arranged to produce the first distance measurements, a time of flight measuring unit (8) arranged to produce the second distance measurements, and a processing unit (4), wherein is implemented the obstacle detection and characterisation method according to one of the preceding claims.

17. Computer program comprising instructions which cause the processing unit (4) of the mobile terminal (2) according to claim 16 to execute the steps of the obstacle detection and characterisation method according to one of claims 1 to 15.

18. Recording support which can be read by a computer, on which the computer program according to claim 17 is recorded.

Fig. 1

Fig. 2

Fig. 3

Fig. 4

Fig. 5

Fig. 6

$$t = \frac{e}{\cos(\theta 2)}$$

Fig. 7

Fig. 8

Fig. 9

Fig. 10

Fig. 11

Fig. 12

30

| Matériel | Constante diélectrique | Indice de réfraction |
|---|---|---|
| Béton (plein) | 7,5 | 2,73 |
| Parpaing | 3 | 1,73 |
| Cloison sèche | 2 | 1,41 |
| Corps humain | 51 | 7,14 |
| Contre-plaqué | 2 | 1,41 |
| Eau | 80 | 8,94 |

Fig. 13

Fig. 14

Fig. 15

```
        ┌─────────┐
        │  Début  │────E0
        └─────────┘
             │
             ▼
    ┌──────────────────┐
    │  Point d'origine │────E1
    │   (x0, y0, z0)   │
    └──────────────────┘
             │
             ▼
  ┌────────────────────────────┐
  │   Navigation inertielle    │
  │ estimation position (x1, y1, z1) │────E2
  │   première mesure de distance    │
  └────────────────────────────┘
             │
             ▼
    ┌──────────────────┐
    │ Deuxième mesure  │────E3
    │ de distance (UWB)│
    └──────────────────┘
             │
             ▼         E4
        ╱─────────╲              Oui
       ╱ (d2 – d1) ╲────────────────┐
       ╲  > Sp ?   ╱                │
        ╲─────────╱                 │
             │ Non                  │
             ▼                      │
    ┌──────────────────┐            │
    │ Recalage (x1, y1, z1) inertiel │────E6
    └──────────────────┘            │
             │                      │
             └──────────┐           │
                        ▼           ▼
          ┌────────────────────────────┐
          │  Calcul indice de réfraction │
          │        R = Δd/0,2m + 1       │────E5
          └────────────────────────────┘
                        │
                        ▼
```

$$R = \frac{\Delta d}{0,2m} + 1$$

Fig. 16

| Index | Matériau | Indice | Distance(i) |
|-------|----------|--------|-------------|
| 1 | Béton | 2,73 | |
| 2 | Parpaing | 1,73 | |
| 3 | Brique | 1,2 | |

31

Fig. 17

i=1; distance=5 — E10

distance(i)=R-indice(i) — E11

E12
distance(i)<distance ?    Oui

Non

matériau = i
distance = distance(i) — E13

i=i+1 — E14

E15
Non    i = ifin ?

Oui

Fin — E16

**EP 4 102 872 B1**

**RÉFÉRENCES CITÉES DANS LA DESCRIPTION**

**Documents brevets cités dans la description**

- US 2008157957 A1

- US 2021037498 A1